# NEUE EUROPÄISCHE PATENTSCHRIFT

(11) **EP 2 624 679 B2**
(45) Veröffentlichungstag und Bekanntmachung des Hinweises auf die Entscheidung über den Einspruch: **19.04.2023**
(45) Hinweis auf die Patenterteilung: 29.11.2017
(21) Anmeldenummer: 10762660.8
(22) Anmeldetag: 04.10.2010
(51) Int. Cl.: A01G 3/037

(54) **HANDBETÄTIGTE GARTENSCHERE**
MANUALLY OPERATED GARDEN SHEARS
SECATEUR À COMMANDE MANUELLE

(43) Veröffentlichungstag der Anmeldung: 14.08.2013
(60) Teilanmeldung: 17203943.0
(73) Patentinhaber: HUSQVARNA AB, 561 82 Huskvarna (SE)
(72) Erfinder: NÄGELE, Karl-Peter, 88441 Mittelbiberach (DE); SCHIEDT, Christoph, 88483 Burgrieden (DE)
(74) Vertreter: Schröer, Gernot H.
(86) Internationale Anmeldenummer: PCT/EP2010/064763
(87) Internationale Veröffentlichungsnummer: WO 2012/045332

(56) Entgegenhaltungen:
- EP-A1- 1 842 632
- EP-B1- 0 028 997
- WO-A1-2005/084416
- WO-A1-2006/043197
- WO-A2-2008/023117
- DE-A1-102009 042 135
- DE-U1- 20 205 106
- DE-U1- 29 613 531
- FR-A1- 2 462 094

## Beschreibung

Die Erfindung betrifft eine handbetätigbare Gartenschere.

Bei handbetätigbaren Gartenscheren wird die Schließkraft, die zum Durchschneiden von zwischen Messern einer Messeranordnung befindlichem Schnittgut erforderlich ist, durch die Handkraft eines Benutzers aufgebracht, welcher die Schere an zwei relativ zueinander beweglichen Handhebeln mit einer Hand oder mit beiden Händen ergreift.

Insbesondere beim Schneiden von Ästen erweist sich häufig die Handkraft des Benutzers als nicht ausreichend, um einen Ast in einem Schneidvorgang durchzuschneiden, so dass umständlich mit mehreren Teilschnitten eine Durchtrennung des Astes versucht wird.

Aus dem deutschen Gebrauchsmuster DE 202 05 106 U1 ist eine handbetätigbare Gartenschere bekannt, welche in einem geöffneten Zustand zur Aufnahme eines Schnittguts ausgebildet ist und für einen Schneidvorgang durch Einwirkung einer Handkraft auf eine Griffanordnung schließbar ist, wobei ein Antriebsmotor vorhanden ist, um eine motorische Schließkraft auf die Messeranordnung zuzuschalten.

Eine derartige Gartenschere wird ebenfalls mit der französischen Patentanmeldung FR 2 462 094 A1 beschrieben, bei welcher mit dem Schließen des Handgriffs der Antriebsmotor mechanisch zugeschaltet wird.

Der vorliegenden Erfindung liegt die Aufgabe zugrunde, eine handbetätigbare Gartenschere mit verbesserter Handhabung anzugeben.

Die Erfindung ist im unabhängigen Anspruch beschrieben. Die abhängigen AnSprüche enthalten vorteilhafte Ausgestaltungen und Weiterbildungen der Erfindung.

Durch die zuschaltbare motorische Schließkraft, worunter eine Ansteuerung des Antriebsmotors zur Ausübung einer solchen motorischen Schließkraft auf die Messeranordnung zu verstehen sei, können vorteilhafterweise Schneidvorgänge in einem Zug durchgeführt werden. Bei bevorzugter Beibehaltung der Handkraft-Betätigung auch nach Zuschalten der motorischen Schließkraft kann eine Gesamtkraft für den Schließvorgang aufgebracht werden, welche höher ist als die motorische Schließkraft, so dass der Antriebsmotor, welcher die motorische Schließkraft aufbringt, vorteilhafterweise in kleiner Bauform und/oder mit geringer Leistungsaufnahme ausgeführt sein kann. Die geringe Leistungsaufnahme ist insbesondere von Vorteil bei einer bevorzugten Ausführung mit einem Elektromotor als Antriebsmotor und einem Akkumulator als elektrische Energiequelle. Bei Verwendung der motorischen Schließkraft lediglich als Zusatzkraft zu der Handkraft des Benutzers kann dann der Akkumulator in kleiner Bauform ausgeführt und/oder eine lange Nutzungsdauer des Akkumulators erreicht werden.

Die motorische Schließkraft kann bei Bedarf mittels eines Betätigungselements, insbesondere eines mit einem Finger einer den Handgriff greifenden Benutzerhand erreichbaren Betätigungselements zugeschaltet werden, insbesondere indem über ein solches Betätigungselement ein Schalter in der Stromversorgung des Elektromotors aus dem Akkumulator geschlossen wird.

Die Zuschaltung der motorischen Schließkraft erfolgt automatisch durch eine elektronische Steuereinrichtung nach Maßgabe wenigstens einer Kenngröße des Schneidvorgangs, wobei eine solche Kenngröße mittels wenigstens eines Sensors und einem durch diesen gewonnenen und in der Steuereinrichtung ausgewerteten Sensorsignal bestimmt wird.

Eine solche Kenngröße des Schneidvorgangs ist die vom Benutzer auf die Handgriffanordnung ausgeübte Handkraft, welche durch ein Handkraft-Sensorsignal eines Handkraft-Sensors repräsentiert ist. Ein Handkraft-Sensor ist vorteilhafterweise in einen von zwei unter der Einwirkung der Handkraft relativ zueinander verlagerbaren Handgriffen integriert und kann in vorteilhafter Ausführung durch eine Wägezelle gegeben sein. Soweit auch vorteilhafterweise die motorische Schließkraft auf die Handgriffanordnung einwirkt, ist bevorzugt der Handkraftsensor im Kraftübertragungsweg der Handkraft zur Messeranordnung vor dem Angriffspunkt der motorischen Schließkraft angeordnet.

Vorteilhafterweise ist für die Handkraft bzw. das Handkraft-Sensorsignal als erstem Sensorsignal ein Schwellwert vorgegeben in der Art, dass die Steuereinrichtung bei unter dem Schwellwert liegendem Messwert des Sensorsignals die motorische Schließkraft nicht zuschaltet. Hierdurch wird zum einen die Energiereserve eines Akkumulators geschont und zum anderen vermieden, dass bei einem von dem Benutzer gezielt mit geringer Krafteinwirkung geführten Schnitt ungewollt die motorische Schließkraft zugeschaltet wird. Der Schwellwert kann veränderlich vorgebbar sein, um eine Anpassung des Steuerverhaltens der Steuereinrichtung an kräftigere und weniger kräftige Benutzer zu ermöglichen.

Eine andere Kenngröße zur Auswertung in der Steuereinrichtung ist die Schließgeschwindigkeit der Messeranordnung. Die Schließgeschwindigkeit der Messeranordnung kann in vorteilhafter Ausführung aus zeitlich aufeinander folgend ermittelten Winkelwerten eines Schließwinkels der Messeranordnung oder der Handgriffanordnung in der Steuereinrichtung gewonnen werden. Schließwinkelwerte lassen sich in vorteilhaft einfacher Weise über einen mit beiden Messern der Messeranordnung und/oder beiden Griffhebeln der Handgriffanordnung verbundenen zweiten Sensor, insbesondere einen kapazitiven Sensor oder vorzugsweise ein Potentiometer ermitteln. In bevorzugter Ausführung ist ein zweiter Sensor als Drehsensor um das Scherengewerbe ausgeführt. Soweit eine Winkelmessung in definierten gleichbleibenden Zeitabschnitten erfolgt, kann auch eine Winkeldifferenz, welche dann mit einem konstanten Faktor zur Schließgeschwindigkeit proportional ist, direkt ausgewertet werden.

Eine Auswertung eines über den zweiten Sensor gewonnenen Werts für die Schließgeschwindigkeit bzw. eine diese Schließgeschwindigkeit repräsentierende Größe zur eventuellen Zuschaltung der motorischen Schließkraft kann in der Steuereinrichtung insbesondere in der Weise erfolgen, dass die motorische Schließkraft nicht zugeschaltet wird, solange die Schließgeschwindigkeit nicht unter einen vorgebbaren zweiten oberen Schwellwert fällt.

In bevorzugter Ausführungsform erfolgt eine Steuerung der zuschaltbaren motorischen Schließkraft in der Weise, dass die Steuereinrichtung die motorische Schließkraft nur zuschaltet, wenn das Handkaft-Sensorsignal den ersten Schwellwert übersteigt und die Schließgeschwindigkeit unter dem zweiten oberen Schwellwert liegt.

Wenn die motorische Schließkraft durch die Steuereinrichtung gemäß den dort vorgegebenen Kriterien für eine oder mehrere Kenngrößen des Schneidvorgangs zugeschaltet ist, kann in erster einfacher Ausführung der Antriebsmotor ohne weitere Differenzierung eingeschaltet bleiben. Der Antriebsmotor wird bei Erreichen einer Endstellung des Schneidvorgangs, welche durch einen Endschalter oder vorzugsweise durch einen Schließwinkelsensor für die Steuereinrichtung erkennbar ist, abgeschaltet.

Eine Beibehaltung der motorischen Schließkraft bis zur Endstellung des Schneidvorgangs kann insbesondere auch vorgesehen sein, wenn das Handkraft-Sensorsignal unter den ersten Schwellwert fällt, so dass die Fortsetzung des Schneidvorgangs nach Zuschalten der motorischen Schließkraft ohne besonderen Kraftbeitrag durch die Handkraft eines Benutzers erfolgt.

In anderer vorteilhafter Ausführung kann die Steuerung der motorischen Schließkraft nach deren Zuschaltung unter weiterer fortlaufender Überprüfung der Kenngrößen des Schneidvorgangs adaptiv erfolgen, indem beispielsweise die Höhe der motorischen Schließkraft durch die Steuereinrichtung variabel steuerbar ist und/oder die motorische Schließkraft auch wieder abschaltbar ist, wenn die Handkraft des Benutzers allein für die Fortsetzung des Schneidvorgangs ausreicht. Eine solche adaptive Steuerung trägt vorteilhaft dem Umstand Rechnung, dass beim Schneiden eines Astes die aufzuwendende Kraft bzw. die Widerstandskraft des Astes im Bereich der Hälfte des Schneidvorgangs bei der Astmitte ein Maximum durchläuft und danach wieder abfällt, so dass eine motorische Zusatzkraft primär in dem Bereich der Astmitte benötigt wird.

In vorteilhafter Ausführung kann vorgesehen sein, die zugeschaltete motorische Schließkraft abzuschalten, wenn die Schließgeschwindigkeit trotz der Einwirkung der motorischen Schließkraft auf oder unter einen zweiten unteren Schwellwert fällt. Ein sehr niedriger Wert der Schließgeschwindigkeit trotz hoher Handkraft und zusätzlicher motorischer Schließkraft kann dabei als Anzeichen gewertet werden, dass der Schneidvorgang nicht zu Ende gebracht werden kann. Der zweite untere Schwellwert kann insbesondere auch einer Schließgeschwindigkeit gleich Null entsprechen. Ein Öffnen der Messeranordnung kann als eine Schließgeschwindigkeit kleiner als Null interpretiert werden.

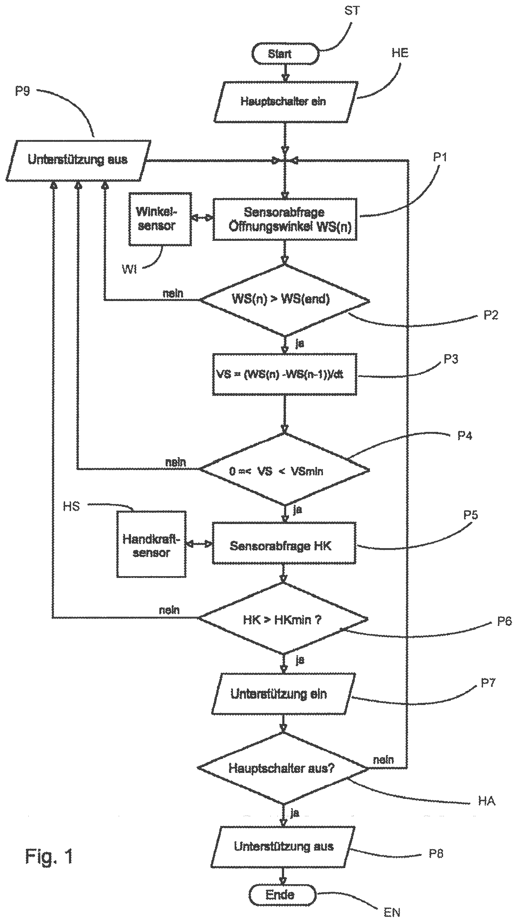

Die Erfindung ist nachfolgend anhand eines in Fig. 1 dargestellten Ablaufschemas einer bevorzugten Steuerungsvariante noch eingehend veranschaulicht.

Bei dem in Fig. 1 dargestellten Ablaufschema sind die mit Start ST und Ende EN bezeichneten Felder lediglich als Teile des Ablaufschemas zu verstehen, ohne dass damit konkrete Geräteaktionen verbunden sind.

Aus Sicherheitsgründen ist an dem Gerät ein Hauptschalter vorgesehen, mittels welchem die Stromzuführung zu dem Antriebsmotor und eventuell der elektronischen Steuereinrichtung unabhängig von einer Steuerung des Antriebsmotors durch die Steuereinrichtung hergestellt bzw. unterbrochen werden kann und welcher in einem ersten Schritt HE vom Benutzer eingeschaltet wird.

Die Zuschaltung einer motorischen Schließkraft sei nachfolgend und in Fig. 1 als Unterstützung, d. h. Unterstützung der Handkraftbetätigung der Schere bezeichnet und verstanden.

Der Ablauf der Steuerung in der Steuereinrichtung umfasst eine Mehrzahl aufeinander folgender Zyklen, in welchen jeweils Kenngrößen des aktuellen Schneidvorgangs bestimmt und ausgewertet werden. Zur Ermittlung von aktuellen Werten von Kenngrößen sind insbesondere ein Winkelsensor WT, welcher zur Bestimmung eines aktuellen Öffnungswinkels WS (n) der Messeranordnung und/oder der Handgriffanordnung der Gartenschere ausgebildet ist, und ein Handkraftsensor HS, welcher zur Messung einer vom Benutzer auf die Handgriffanordnung ausgeübten Handkraft HK in Schließrichtung der Handgriffanordnung eingerichtet ist, vorgesehen.

Bei dem skizzierten Steuerungsablauf wird anfänglich in einem Schritt P1 durch die Steuereinrichtung von einem Winkelsensor WI der aktuelle Öffnungswinkel WS (n) abgefragt und der abgefragte Wert WS (n) des Öffnungswinkels wird im Schritt P2 mit einem für den Winkelsensor abgespeicherten und der Endstellung der Schließbewegung der Messeranordnung entsprechenden Grenzwert WS (end) verglichen. Solange ein aktueller Schneidvorgang nicht abgeschlossen ist, ist die Messeranordnung der Schere nicht vollständig geschlossen und der aktuell gemessene Wert WS (n) des Öffnungswinkels ist größer als der gespeicherte Grenzwert für den Öffnungswinkel. In diesem Falle schreitet die Steuereinrichtung in dem Verarbeitungsablauf zu P3 weiter und bestimmt aus dem aktuellen Wert WS (n) des Öffnungswinkels und wenigstens einem aus einem um eine Zeitspanne dt zurückliegenden Wert WS (n-1) des Öffnungswinkels einen aktuellen Wert für die Schließgeschwindigkeit VS = (WS(n) - WS (n-1)) dt. Bei gleichbleibenden Zeitspannen dt zwischen verglichenen Winkelwerten kann als Maß für die Schließgeschwindigkeit auch nur die Winkeldifferenz WS (n) - WS (n-1) bestimmt und ausgewertet werden.

Dieser für die Schließgeschwindigkeit bestimmte Wert VS wird danach im Schritt P4 mit einem Schwellwert VSmin verglichen.

Wenn die so ermittelte Schließgeschwindigkeit größer als Null ist, aber einen abgespeicherten Mindestwert VSmin unterschreitet, was auf eine für die Fortsetzung des Schneidvorgangs eventuell kritische Widerstandskraft des zuschneidenden Astes im Vergleich zur maximal möglichen Handkraft des Benutzers hindeutet, wird in einem Schritt P5 zusätzlich von einem Handkraftsensor HS die aktuell von dem Benutzer auf die Handgriffanordnung ausgeübte Handkraft HK abgefragt und im Schritt P6 mit einem gespeicherten Schwellwert HKmin verglichen.

Liegt bei dem letztgenannten Vergleich in P6 die durch die Steuereinrichtung von dem Handkraftsensor abgefragte Handkraft über dem gespeicherten Schwellwert HKmin, so wird dies im Sinne der Prüfkriterien der Steuereinrichtung so interpretiert, dass der Benutzer versucht, mit der ihm zur Verfügung stehenden Kraft den Schneidvorgang fortzusetzen, dass aber wegen der geringen Schneidgeschwindigkeit VS der Benutzer mit der ihm zur Verfügung stehenden Kraft an seine Grenzen stoßen könnte. Bei über der ersten Schwelle HKmin liegender Handkraft HK und gleichzeitig unter der zweiten oberen Schwelle VSmin liegender Schneidgeschwindigkeit VS wird daher als Schritt P7 die Kraftunterstützung eingeschaltet, indem die Steuereinrichtung den Antriebsmotor, welcher die motorische Schließkraft aufbringt, einschaltet.

Bei eingeschalteter Unterstützung wird in jedem Zyklus in einem Schritt P8 überprüft, ob der Hauptschalter noch eingeschaltet ist und gegebenenfalls ein neuer Prüfzyklus mit erneuter Abfrage des Öffnungswinkels WS begonnen.

Wenn im Verlauf eines Schneidvorgangs die Endstellung der Schließbewegung erreicht ist, ergibt sich für den Öffnungswinkel ein Wert WS (n), welcher nicht mehr größer ist als der gespeicherte Grenzwert WS (end), und nach dem Vergleich in P2 wird die Unterstützung gemäß P9 ausgeschaltet.

Wenn sich beim Vergleich der Schließgeschwindigkeit VS mit dem gespeicherten zweiten oberen Schwellwert VSmin in P4 ergibt, dass die aktuelle Schneidgeschwindigkeit größer ist als der gespeicherte zweite obere Grenzwert, wird dies im Sinne der Prüfkriterien der Steuereinrichtung so interpretiert, dass der Schneidvorgang hinreichend zügig allein durch die Benutzerkraft erfolgen kann und eine Unterstützung durch die motorische Schließkraft nicht erforderlich ist. In diesem Falle unterbleibt gemäß P9 das Zuschalten der Unterstützung.

Wenn zwar die Überprüfung der Schneidgeschwindigkeit in P4 auf die Notwendigkeit einer Unterstützung hinweist, die aktuelle Handkraft HK aber kleiner ist als der erste Schwellwert HKmin wird dies im Sinne der Prüfkriterien der Steuereinrichtung im Schritt P6 so interpretiert, dass der Benutzer ausreichend Kraftreserven für einen allein durch Handkraft durchgeführten Schnitt besitzt und den Schneidvorgang bewußt mit geringer Schneidgeschwindigkeit durchführt. Auch in diesem Fall unterbleibt gemäß P9 die Zuschaltung der Unterstützung.

Wenn der Hauptschalter ausgeschaltet wird, wird auch eine zuvor durch die Steuereinrichtung zugeschaltete Unterstützung ausgeschaltet, wobei typischerweise mit Ausschalten des Hauptschalters auch die Stromzufuhr zu dem die motorische Schließkraft aufbringenden Antriebsmotor unterbrochen ist und das Ausschalten der Unterstützung vor dem Ende des Ablaufschemas dann im wesentlichen als ein Rücksetzen der Steuereinrichtung zu verstehen ist.

Der anhand der Fig. 1 schematisch skizzierte Ablauf einer Steuerung durch die Steuereinrichtung ist lediglich als ein vorteilhaftes Beispiel zu sehen, welches auf verschiedene Arten abgewandelt werden kann. Insbesondere kann die Reihenfolge der Abfrage der beiden dargestellten Sensoren zeitlich umgekehrt liegen. Durch Sensorabfrage gewonnene Werte können über mehrere Zyklen gemittelt werden, um Falschreaktionen der Steuerung durch zufällige Schwankung von Sensormesswerten zu vermeiden. Zusätzlich können Plausibilitätsprüfungen von Sensorwerten vorgesehen sein.

## Patentansprüche

1. Handbetätigte Gartenschere mit einer Messeranordnung, welche in einem geöffneten Zustand zur Aufnahme eines Schnittguts ausgebildet ist und für einen Schneidvorgang durch Einwirkung einer Handkraft auf eine Griffanordnung schließbar ist,
wobei ein Antriebsmotor vorhanden ist, um eine motorische Schließkraft auf die Messeranordnung zuzuschalten, und
wobei wenigstens ein Sensor zur Bestimmung einer Kenngröße eines Schneidvorgangs vorgesehen ist und eine elektronische Steuereinrichtung nach Maßgabe eines bestimmten Wertes der Kenngröße den Antriebsmotor ansteuert und die motorische Antriebskraft zuschaltet, **dadurch gekennzeichnet, dass**
die Sensoren einen ersten, zur Abgabe eines die von einem Benutzer auf die Griffanordnung ausgeübte Handkraft repräsentierenden Handkraft-Sensorsignals eingerichteten, und einen zweiten, zur Bestimmung der Schließgeschwindigkeit der Messeranordnung eingerichteten, Sensor umfassen.

2. Gartenschere nach Anspruch 1, **dadurch gekennzeichnet, dass** der erste Sensor eine mit einem von zwei Griffen der Griffanordnung verbundene Wägezelle enthält.

3. Gartenschere nach Anspruch 1 oder 2, **dadurch gekennzeichnet, dass** in der Steuereinrichtung ein erster Schwellwert für das Handkraft-Sensorsignal vorgegeben ist.

4. Gartenschere nach Anspruch 3, **dadurch gekennzeichnet, dass** die Steuereinrichtung die motorische Schließkraft bei unter dem ersten Schwellwert liegendem Handkraft-Sensorsignal nicht zuschaltet.

5. Gartenschere nach Anspruch 4, **dadurch gekennzeichnet, dass** der erste Schwellwert veränderlich vorgebbar ist.

6. Gartenschere nach Anspruch 1, **dadurch gekennzeichnet, dass** der zweite Sensor zur Abgabe eines den Schließwinkel der Messeranordnung repräsentierenden zweiten Sensorsignals eingerichtet ist und die Steuereinrichtung aus zeitlich aufeinander folgend gewonnenen zweiten Sensorsignalen die Schließgeschwindigkeit ermittelt.

7. Gartenschere nach Anspruch 6, **dadurch gekennzeichnet, dass** der zweite Sensor ein Drehpotentiometer um das Scherengewerbe enthält.

8. Gartenschere nach einem der Ansprüche 1, 6 oder 7, **dadurch gekennzeichnet, dass** für die Schließgeschwindigkeit ein zweiter oberer Schwellwert vorgegeben ist.

9. Gartenschere nach Anspruch 8, **dadurch gekennzeichnet, dass** die Steuereinrichtung die motorische Antriebskraft nicht zuschaltet, wenn die bestimmte Schließgeschwindigkeit über dem zweiten oberen Schwellwert liegt.

10. Gartenschere nach einem der Ansprüche 1 oder 6 bis 9, **dadurch gekennzeichnet, dass** für die Schließgeschwindigkeit ein zweiter unterer Schwellwert vorgegeben ist und die Steuereinrichtung die motorische Antriebskraft nicht zuschaltet oder nach vorangegangener Zuschaltung abschaltet, wenn die bestimmte Schließgeschwindigkeit auf dem zweiten unteren Schwellwert oder darunter liegt.

11. Gartenschere nach Anspruch 10, **dadurch gekennzeichnet, dass** der untere Schwellwert einer Schließgeschwindigkeit gleich Null entspricht.

12. Gartenschere nach Anspruch 4 und 9, **dadurch gekennzeichnet, dass** die Steuereinrichtung die motorische Schließkraft zuschaltet, wenn das Handkraft-Sensorsignal über dem ersten Schwellwert und die Schließgeschwindigkeit unter dem zweiten oberen Schwellwert liegt.

13. Gartenschere nach Anspruch 12, **dadurch gekennzeichnet, dass** die Steuereinrichtung die motorische Schließkraft zugeschaltet läßt, wenn das Handkraft-Sensorsignal unter den ersten Schwellwert fällt.

14. Gartenschere nach Anspruch 12, **dadurch gekennzeichnet, dass** die Steuereinrichtung die motorische Schließkraft abschaltet, wenn das Handkraft-Sensorsignal den ersten Schwellwert unterschreitet und/oder wenn die Schließgeschwindigkeit den zweiten oberen Schwellwert überschreitet.

15. Gartenschere nach einem der Ansprüche 1 bis 14, **dadurch gekennzeichnet, dass** der Antriebsmotor ein Elektromotor ist.

## Claims

1. Hand-operated garden shears having a blade arrangement, which, in an opened condition, is designed to accept material to be cut and, by means of manual force applied to a grip arrangement, can be closed for a cutting process,
wherein a drive motor is provided in order to connect a motorized closing force with the blade arrangement, and wherein at least one sensor is provided for determining a parameter for a cutting process, and an electronic control device which, in accordance with a certain parameter value, controls the drive motor and connects the motorized driving force,
**characterized in that**,
the sensors comprise a first sensor adapted to output a manual force sensor signal representing the manual force exerted by a user on the grip arrangement, and a second sensor adapted to determine the closing speed of the blade arrangement.

2. Garden shears according to claim 1, **characterized in that** the first sensor includes a load cell attached to one of the two grips of the grip arrangement.

3. Garden shears according to claim 1 or 2, **characterized in that** a first threshold value for the manual force sensor signal is predefined in the control device.

4. Garden shears according to claim 3, **characterized in that** the control device does not connect the motorized closing force while the manual force sensor signal is beneath first threshold value.

5. Garden shears according to claim 4, **characterized in that** the first threshold value can be variably predefined.

6. Garden shears according to claim 1, **characterized in that** the second sensor is configured for the output of a second sensor signal representing the closing angle of the blade arrangement, and the control device determines the closing velocity from second sensor signals obtained at successive intervals.

7. Garden shears according to claim 6, **characterized in that** the second sensor includes a rotary potentiometer around the shear body.

8. Garden shears according to any of claims 1, 6, or 7, **characterized in that** a second upper threshold value is predefined for the closing velocity.

9. Garden shears according to claim 8, **characterized in that** the control device does not connect the motorized driving force if the determined closing velocity is above the second upper threshold value.

10. Garden shears according to any of claims 1 or 6 to 9, **characterized in that** a second lower threshold value is predefined for the closing velocity, and, if the determined closing velocity is at or below the second lower threshold value, the control device does not connect the motorized driving force, or disconnects it if connection has already occurred.

11. Garden shears according to claim 10, **characterized in that** the lower threshold value corresponds to a closing velocity equal to zero.

12. Garden shears according to claims 4 and 9, **characterized in that** the control device connects the motorized closing force if the manual force sensor signal is above the first threshold value and the closing velocity is below the second upper threshold value.

13. Garden shears according to claim 12, **characterized in that** the control device allows the motorized closing force to remain connected if the manual force sensor signal falls below the first threshold value.

14. Garden shears according to claim 12, **characterized in that** the control device disconnects the motorized closing force if the manual force sensor signal goes below the first threshold value and/or the closing velocity exceeds the second upper threshold value.

15. Garden shears according to any of claims 1 to 14, **characterized in that** the drive motor is an electric motor.

## Revendications

1. Sécateur à commande manuelle avec un ensemble de lames qui est conçue pour recevoir en position ouverte ce qu'il à découper et qui est refermable pour effectuer une découpe par l'action de la force des mains sur un ensemble de poignées, où est présent un moteur d'entrainement pour exercer une force de serrage motorisée sur l'ensemble de lames,
et où est prévu au moins un capteur pour déterminer un paramètre du processus de découpe et où un dispositif de commande contrôle le moteur d'entraînement conformément à une valeur déterminée du paramètre et exerce la force d'entraînement motorisée,
**caractérisé en ce que**
les capteurs comprennent un premier capteur agencé pour émettre un signal de capteur de force manuelle représentant la force manuelle exercée par un utilisateur sur l'ensemble de poignée, et un second capteur agencé pour déterminer la vitesse de fermeture de l'ensemble de lame.

2. Sécateur selon la revendication 1, **caractérisé en ce que** le premier capteur contient une cellule de pesée liée à une parmi deux poignées de l'ensemble de poignées.

3. Sécateur selon la revendication 1 ou 2, **caractérisé en ce qu'**est assignée dans le dispositif de commande une première valeur seuil pour le signal de capteur de force manuelle.

4. Sécateur selon la revendication 3, **caractérisé en ce que** le dispositif de commande n'exerce pas de force de serrage si le signal de capteur de force manuelle est inférieur à la première valeur seuil.

5. Sécateur selon la revendication 4, **caractérisé en ce que** la première valeur seuil peut être assignée de façon variable.

6. Sécateur selon la revendication 1, **caractérisé en ce que** le deuxième capteur est agencé pour délivrer un deuxième signal de capteur représentant l'angle de serrage de l'ensemble de lames et **en ce que** le dispositif de commande détermine la vitesse de serrage à partir de deuxièmes signaux détectés successivement.

7. Sécateur selon la revendication 6, **caractérisé en ce que** le deuxième capteur contient un potentiomètre rotatif autour du système de découpe.

8. Sécateur selon l'une des revendications 1, 6 ou 7, **caractérisé en ce qu'**est assignée une deuxième valeur seuil supérieure pour la vitesse de serrage.

9. Sécateur selon la revendication 8, **caractérisé en ce que** le dispositif de commande n'exerce pas de force de serrage motorisée si la vitesse de serrage déterminée est supérieure à la valeur seuil supérieure.

10. Sécateur selon l'une des revendications 1 ou 6 à 9, **caractérisé en ce qu'**est assignée une deuxième valeur seuil inférieure pour la vitesse de serrage, et **en ce que** le dispositif de commande n'exerce pas de force de serrage motorisée ou la désactive après activation préalable, si la vitesse de serrage déterminée est inférieure ou égale à la deuxième valeur seuil inférieure.

11. Sécateur selon la revendication 10, **caractérisé en ce que** la valeur seuil inférieure correspond à une vitesse de serrage nulle.

12. Sécateur selon les revendications 4 et 9, **caractérisé en ce que** le dispositif de commande exerce la force de serrage motorisée si le signal du capteur de force manuelle est supérieur à la première valeur seuil et si la vitesse de serrage est inférieure à la deuxième valeur seuil supérieure.

13. Sécateur selon la revendication 12, **caractérisé en ce que** le dispositif de commande active la force de serrage motorisée si le signal du capteur de force manuelle tombe sous la première valeur seuil.

14. Sécateur selon la revendication 12, **caractérisé en ce que** le dispositif de serrage désactive la force de serrage motorisée si le signal du capteur de force manuelle tombe sous la première valeur seuil et/ou si la vitesse de serrage passe au-dessus de la deuxième valeur seuil supérieure.

15. Sécateur selon l'une des revendications 1 à 14, **caractérisé en ce que** le moteur d'entrainement est un moteur électrique.
